# EUROPEAN PATENT APPLICATION

(11) **EP 0 918 428 A2**
(43) Date of publication of application: **26.05.1999**
(21) Application number: 98660102.9
(22) Date of filing: 09.10.1998
(51) Int. Cl.: H04M 11/04

(54) **Method and apparatus for a security service use**

(30) Priority: 10.10.1997 FI 973935
(71) Applicant: Helsingin Puhelin OYJ - Helsingfors Telefon ABP, 00130 Helsinki (FI)
(72) Inventor: Lehikoinen, Panu, 02760 Espoo (FI); Pesonen, Markku, 00900 Helsinki (FI); Van Der Meer, Jan, 01450 Vantaa (FI)
(74) Representative: Lipsanen, Jari Seppo Einari

(57) **Abstract**

The present invention relates to a method and apparatus for a security surveillance system. The method uses a digital telephone line as the transmission path and the condition of the transmission path is monitored in a connectionless manner by means of sending control information onto said transmission path at regular intervals. According to the invention, the control information used is the frame structure of layer 1 of the OSI protocol whose transmission between the switching center and the terminal equipment is set in a continuously active state, and in an alarm situation, the vacancy of the line is tested, and in the case of a nonvacancy, the U-interface of the connection is opened by means of a galvanic contact so as to set up at least a temporary disconnection.

## Description

The present invention relates to a method according to the preamble of claim 1 for providing a security service.

The present invention also concerns an apparatus for security service use.

The term security service herein refers to a comprehensive entity offered by a security service provider for continuous monitoring of the premises or other specific objects of a customer against different types of special and emergency hazards. Typical services include, e.g., alarm transfer with a nationwide and/or local coverage and a message transfer service. The services comprise such functions as a supervised transmission path from the customer premises to the alarm center (security service provider, police, fire brigade or the like). Generally, the security service provider takes the responsibility of maintaining the entire transmission path and assuring a continuous 24-hour service availability.

A network solution adapted for security services may be expected to have at least the following basic properties:
- bidirectional operation
- short response times
- alarm transfer capability even if the connection is busy
- transfer path condition monitoring (against line tampering, for instance).

To make such a solution cost-effective to use, it must be available as widely as possible. Moreover, the solution should avail of existing transmission techniques as extensively as possible.

Conventional security services are based on analog transmission techniques. The data rate of typical terminal equipment is marginally sufficient for transferring simple alarm messages, but does not give any headroom for further development. Prior-art network solutions are demanding and expensive to maintain, which is naturally reflected in customer charging rates. Obviously, such services can be afforded by larger companies only.

Two different approaches have traditionally been available for implementing the condition monitoring of a network. Firstly, it has been possible to use separate network condition monitoring equipment that is galvanically connected over the line being monitored in order to measure the electrical characteristics of a local loop. Secondly, the terminal equipment used in security service systems may include properties permitting the equipment to poll each other over the network condition at scheduled intervals, whereby changes in the polling cycle trigger an alarm. Hence, such solutions need either relatively expensive special devices, or alternatively, auxiliary connections must be set up over the network that are unnecessary to the actual service, thus causing extra load on the capacity of the network and costing money to the customer.

In ISDN connections, network condition monitoring can be implemented at a reasonable cost by utilizing the monitoring function existing in switching centers. Conventionally, the switching center performs condition monitoring of ISDN lines and network terminal equipment by means of a so-called continuity test at about half-hour intervals. However, for the needs of security services, this is an excessively long delay period.

A significant speed increase could be attained by updating systems to an entirely ISDN-based digital data transmission. However, it may be assumed that alarm equipment manufacturers are not apt to start developing novel designs of expensive terminal equipment.

DE Pat. Appl. No. 44 07 046 discloses an embodiment having the customer end provided with equipment capable of transmitting bit-stream data over a digital ISDN connection for the purpose of monitoring the availability of the connection. This embodiment is based on the concept that the customer-end equipment attempts to set up a connection to the security service provider and when the called party detects from the B-number signalling that the calling party is the customer proper, the process of setting up a connection is terminated. Conversely, if the security service provider finds a deviation in the preset rate of these call attempts, an alarm is triggered. To accomplish this function, extremely complicated and expensive equipment are needed at the customer end.

It is an object of the present invention to overcome the drawbacks of conventional techniques and to provide an entirely novel type of method and apparatus for security service use.

The goal of the invention is achieved by virtue of utilizing the connection monitoring facility of the OSI protocol for layer 1 transmission between the switching center and the customer ISDN terminal that is available as a continuous standard function from the switching center side. In practice, the method according to the invention is implemented by sending continuous bit-stream data in a connectionless manner between the switching center and the customer network terminal, thus making it possible to achieve an almost realtime continuity monitoring of the connection. According to a preferred embodiment of the invention, the U-interface of the connection is provided with a switch serving to disconnect the connection under the control of the alarm equipment in the case that the line is busy and the alarm equipment senses an alarm situation.

More specifically, the method according to the invention is characterized by what is stated in the characterizing part of claim 1.

Furthermore, the apparatus according to the invention is characterized by what is stated in the characterizing part of claim 5.

The invention offers significant benefits.

As known, the switching time of a digital telephone network is not greater than 1 second. In practice, the connection of a network connection is so fast that the delay remains insignificant to the overall function of an alarm system. The overall switching time from triggering an alarm signal to its reception is in fact more related to the types of terminal equipment actually used and their technical implementations.

The present invention makes it possible to expand the applications of ISDN technology in an entirely novel fashion. With the increasing demand on security services, the potential of the new service concept can be expected to be extremely good provided that the charging rates of its availability are kept within reason. In fact, the novel concept may be seen as a first of a kind intended for wide distribution, including consumer marketing, of a security service product based on a realtime-monitored network solution. As compared to other security service techniques, the embodiment disclosed herein has a distinct benefit by being able to use the existing network infrastructure and offering compatibility with standard equipment. By contrast, other commercially marketed solutions of equivalent functionality are either based on expensive dedicated network arrangements or require a much higher level of performance from the terminal equipment.

ISDN techniques make it possible to avail of the basic characteristics of a digital telephone network in security services including the network's reliable fast-rate data transmission properties, rapid switching times and the facility of using a single line for a plurality of simultaneous connections.

In developed countries, the availability of ISDN functions is today 100 % in cities and typically better than 90 % on a nationwide scale. The technique used herein has a service history of several years and has been found to operate reliably.

The solution according to the invention is capable of fulfilling all the above-described basic needs of security services, simultaneously offering a plurality of novel service features. Owing to the high data transmission capacity of an ISDN connection, the level of service may be improved in the future by adding such elements as the transmission of a video signal and others.

In the following, the invention will be examined in greater detail with reference to exemplifying embodiments illustrated in the appended drawings, in which
Figure 1 shows schematically an embodiment of a security service system according to the invention; and
Figure 2 shows the flow diagram of a method according to the invention.

According to a specification of the invention, the condition of the ISDN connection is supervised from the switching center side by monitoring the frame transmission of the physical layer 1 at the U-interface. While the delay in the triggering of an alarm by the network monitoring program for a connection failure is dependent on the switching center technology used, specifications issued by manufacturers of such equipment typically give figures in the order of about 10 s.

According to the invention, the monitoring of the U-interface is implemented by setting the layer 1 transmission according to the OSI protocol into a continuously active state from the switching center side. Then the switching center can perform condition monitoring on the state of the connection. Hence, tampering by severing the line or disconnecting the terminal equipment will trigger an essentially realtime alarm. The alarm processing program of the switching center is complemented with a data base containing information on all the connections included in the provided security service. With the help of a dedicated program, data related to security service customers can be screened from the stream of alarms and transferred to a special treatment. All the screened alarms are also recorded automatically in a log for later processing.

For an alarm system/robotic alarm telephone, the situation of a busy line is particularly problematic. This fact is also generally known to lawbreakers. The simplest trick to prevent a robotic alarm telephone operating over a normal telephone connection from functioning is to call the telephone connection of the alarm system by means of a mobile phone or other telephone just prior to the instant of breaking-in. Thus, the connection can be made busy and the alarm system will be inhibited from transferring the alarm.

With regard to an ISDN connection, the situation is better in the sense that the basic data rate features of the connection include two voice channels. Thus, the blocking of the connection by making it busy requires two calls to be set up simultaneously. While this makes the trick more difficult to accomplish, a person having access to the necessary information at will can block even this type of a connection. In the same fashion as in analog connections, an ISDN terminal has no means within the constraints of a normal ISDN signalling scheme to clear such B-channel connection that have not been set up by the terminal equipment itself. Hence, also herein it is possible to set up a blocking situation which obviously is most undesirable in terms of an alarm situation.

However, there can be found a technique of assuring reliable alarms transfer under a "busy" situation by means of a special connection adapted to the customer end of the U-interface. Using an electrically controllable normally-closed switch such as a relay, the alarm equipment can be facilitated to temporarily disconnect the physical-level loop of the U-interface. Resultingly, all the B-channel connections of the concerned line will be disconnected immediately. The disconnection of the U-interface will also issue an alarm at the switching center end that can be utilized in the same fashion as in a normal network monitoring situation. Obviously, this arrangement requires the alarm equipment to be provided with both an electric control output suitable for driving a relay, for instance, and the built-in intelligence functions suitable for implementing the desired feature.

As the present solution uses only a temporary disconnection of the U-interface, the alarm equipment can as needed reinitiate the transmission of the alarm as soon as the interface is reconnected. In a number of cases this feature may be redundant, since the disconnection of the line alone is sufficient for issuing an alarm.

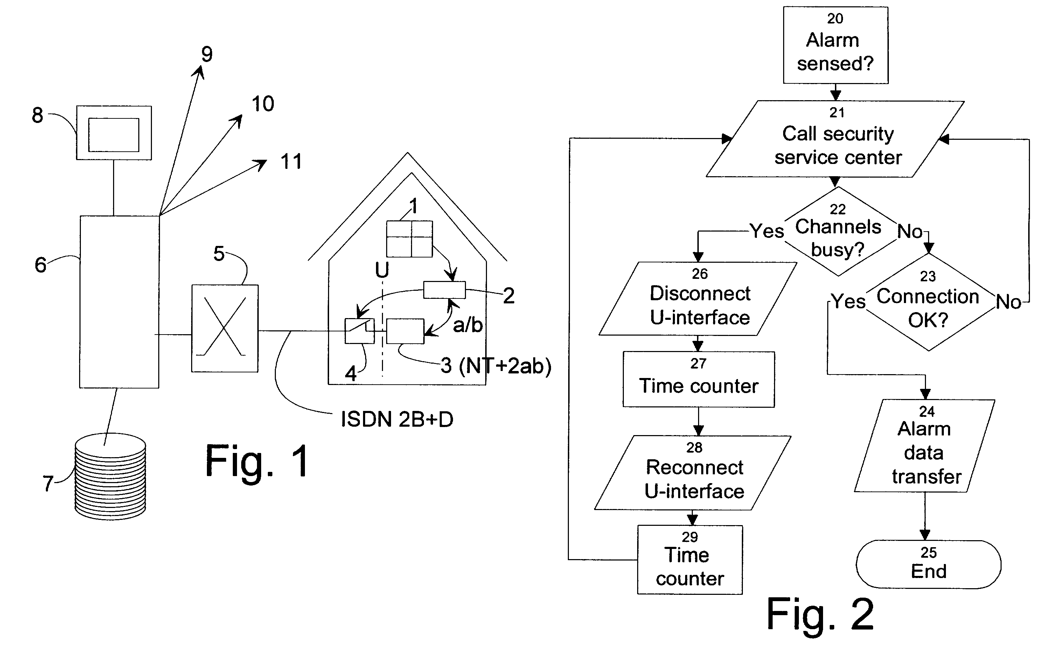

Now referring to Fig. 1, therein is illustrated a practicable embodiment for implementing the invention. A security survellance system 2 is shown having a plurality of sensors 1 connected thereto for the purpose of, e.g., monitoring break-in tampering of windows. The security surveillance system 2 may comprise, e.g., a conventional alarm sensor system/robotic telephone caller equipped with required facilities, or alternatively, it can be a specific ISDN-based alarm system offering an equivalent level of functionality. The alarm sensor system 2 is interfaced via an a/b adapter to the ISDN terminal equipment 3. Alarm transfer from the customer premises is forwarded in a conventional manner over the B-channel in the same fashion as in an analog connection. The terminal equipment 3 in turn is connected to the U-interface of the ISDN terminal equipment, which is also complemented with a disconnecting device 4, typically a relay. The disconnecting device 4 is controlled by means of the security surveillance system 2 so that, at the detection of an alarm signal under a situation having both voice lines busy, the disconnecting device 4 is opened at least temporarily, whereby an alarm is issued due to disconnection of the line at least by the automatic condition monitoring of the connection to a supervisory control computer 6 which is accessible via the normal telephone network 5. Naturally, the control computer 6 is provided with a display 8 suitable for indicating the alarms and a data base 7 containing information on which the control computer can perform the desired actions 9, 10 and 11 according to the situation and type of alarm at the monitored object. As required, the alarm may be transferred directly to a security services provider 9 (such as a security firm, an official or the like) or to an operator control room 10, wherefrom it may be further routed to, e.g., a GSM short message service or a faxing service 11. The present solution offers flexible possibilities of developing different service facilities by, e.g., customer segments. Obviously, the disconnecting device 4 such as a relay can be replaced by a solid-state switch or optical switch as is appropriate in the technology used.

As shown in Fig. 2, the embodiment illustrated in Fig. 1 is controlled as follows:

When an alarm situation is detected by block 20, an alarm is issued by block 21 to an alarm reception center. The "busy" condition of the voice channels is tested in block 22, and if the channels are vacant, the setting-up of the connection is tested in block 23. If the connection can be set up, the alarm data is transferred to the alarm control computer 6 for further processing. In the opposite case that the attempt to set up a connection fails, the flow diagram returns to block 21.

In the case that the channels were found busy in block 22, the U-interface is disconnected by the disconnecting device 4. The duration of the disconnect period is determined in block 27, and the switch is reclosed in block 28, whereafter a delay is set up by block 29 before the operation is returned to block 21 for a repeated attempt to call the alarm control center 6.

## Claims

1. A method for providing a security service, in which method
- a digital telephone line is used as the transmission path, and
- the condition of the transmission path is monitored in a connectionless manner by means of sending control information onto said transmission path,
**characterized** in that
- said control information is formed by the synchronous frame structure of layer 1 according to the OSI protocol transmitted between a switching center and the terminal equipment, and
- in an alarm situation, the connection is tested for vacant channels, and in the case of nonavailability of vacant channels, the connection (U) is disconnected at least temporarily in order to issue an alarm.

2. A method as defined in claim 1, **characterized** in that the disconnection of said connection is accomplished at the U-interface of said ISDN connection by means of opening a galvanic contact with the help of a relay (4).

3. A method as defined in claim 1 or 2, **characterized** in that said control information is sent by setting said ISDN protocol into a permanently active state.

4. A method as defined in claim 1, 2 or 3, **characterized** in that the connection monitoring function is accomplished by utilizing the automatic supervisory functions of switching centers.

5. An apparatus for a security service, said apparatus comprising
- a security surveillance system (2),
- at least one sensor (1) connected to said security surveillance system (2), and
- interface means (3) for connecting said security surveillance system (2) to telecommunication transmission paths (5),
**characterized** in that
- between said interface means (3) and said telecommunication transmission path is adapted a disconnecting means (4) serving to disconnect said transmission path at least temporarily.

6. An apparatus as defined in claim 5, **characterized** in that said disconnecting means (4) is an electrically controllable switch such as a relay.

7. An apparatus as defined in claim 5, **characterized** in that said disconnecting means (4) is a solid-state switch.

8. An apparatus as defined in claim 5, **characterized** in that said disconnecting means (4) is an optical switch.
